# EUROPÄISCHE PATENTSCHRIFT

(11) **EP 3 790 222 B1**
(45) Veröffentlichungstag und Bekanntmachung des Hinweises auf die Patenterteilung: **06.04.2022**
(21) Anmeldenummer: 20194732.2
(22) Anmeldetag: 04.09.2020
(51) Int. Cl.: H04L 9/08, H04J 14/02, H04L 1/00, H04B 10/70

(54) **VERFAHREN UND KOMMUNIKATIONSNETZ ZUR ÜBERTRAGUNG VON QKD-SIGNALEN**
METHOD AND COMMUNICATIONS NETWORK FOR TRANSMISSION OF QKD SIGNALS
PROCÉDÉ ET RÉSEAU DE COMMUNICATION DESTINÉS À LA TRANSMISSION DES SIGNAUX QKD

(30) Priorität: 05.09.2019 DE 102019123875
(43) Veröffentlichungstag der Anmeldung: 10.03.2021
(73) Patentinhaber: Deutsche Telekom AG, 53113 Bonn (DE)
(72) Erfinder: WISSEL, Felix, 64372 Ober-Ramstadt (DE); GUNKEL, Matthias, 64291 Darmstadt (DE)
(74) Vertreter: Brandt & Nern Patentanwälte

(56) Entgegenhaltungen:
- GB-A- 2 514 134
- US-A1- 2016 218 867
- YUAN CAO ET AL: "Time-Scheduled Quantum Key Distribution (QKD) Over WDM Networks", JOURNAL OF LIGHTWAVE TECHNOLOGY, Bd. 36, Nr. 16, 15. August 2018 (2018-08-15), Seiten 3382-3395, XP055764537, USA ISSN: 0733-8724, DOI: 10.1109/JLT.2018.2834949
- QIAN YI ET AL: "Multiplexing C-band quantum key distribution with O-band classical optical communication over common optical fiber at metro access distance", 2018 ASIA COMMUNICATIONS AND PHOTONICS CONFERENCE (ACP), IEEE, 26. Oktober 2018 (2018-10-26), Seiten 1-4, XP033486696, DOI: 10.1109/ACP.2018.8595725 [gefunden am 2018-12-28]

## Beschreibung

Die Erfindung betrifft eine Lösung für die Übertragung von QKD-Signalen zur quantenmechanisch gesicherten Verteilung kryptographischer Schlüssel in einem Kommunikationsnetz. Sie betrifft ein entsprechendes Verfahren und ein zu dessen Ausführung ausgebildetes Kommunikationsnetz, welche es ermöglichen, QKD-Signale für eine nach dem QKD-Prinzip, also nach dem Prinzip der Quantum Key Distribution, unter Nutzung quantenmechanischer Effekte erfolgende Generierung und Verteilung kryptografischer Schlüssel zumindest in einem Pfadabschnitt des Kommunikationsnetzes im Wege einer Ko-Propagation mit anderen Signalen zu übertragen.

Der Sicherheit der über ein Kommunikationsnetz zwischen Teilnehmern übertragenen Daten, insbesondere aber auch der Absicherung von Kommunikationsnetzen gegenüber destruktiven und/oder dem Datendiebstahl dienenden Attacken kommt eine sehr große Bedeutung zu. Seit längerem ist es daher gebräuchlich, dem Betrieb eines Kommunikationsnetzes dienende Steuerdaten und im zunehmenden Maße auch zwischen den Teilnehmern beziehungsweise den Nutzern des Kommunikationsnetzes übertragene Nutzdaten zu verschlüsseln. Bei den hierfür angewendeten Verschlüsselungsverfahren wird zwischen symmetrischen Verfahren und asymmetrischen Verfahren unterschieden.

Während bei den asymmetrischen, auch als Public-Key-Verfahren bezeichneten Verschlüsselungsverfahren für die Verschlüsselung von Daten einerseits und für deren Entschlüsselung andererseits unterschiedliche Schlüssel verwendet werden und dabei der zur Verschlüsselung der Daten verwendete Schlüssel als öffentlicher Schlüssel jedermann bekannt sein kann, werden bei symmetrischen Verschlüsselungsverfahren zur Verschlüsslung der Daten und für deren spätere Entschlüsselung jeweils dieselben Schlüssel benutzt. Diese geheimen Schlüssel dürfen ausschließlich der verschlüsselnden Seite einer Kommunikationsverbindung und der dazu berechtigten empfangenden Seite bekannt sein.

Die symmetrischen Verschlüsselungsverfahren bieten gegenüber den asymmetrischen Verschlüsselungsverfahren vermeintlich ein höheres Maß an Sicherheit gegenüber Angriffen, die darauf gerichtet sind, den zur Entschlüsselung verschlüsselter Daten erforderlichen Schlüssel zu erbeuten und durch dessen Verwendung die mit den verschlüsselten Daten übertragenen Informationen in illegaler Weise in Erfahrung zu bringen. Allerdings erfordern symmetrische Verschlüsselungsverfahren insoweit einen höheren Aufwand, als deren praktische Umsetzung, im Hinblick auf das Erfordernis des Vorliegens jeweils gleicher Schlüssel bei der Daten sendenden Seite und bei der diese empfangenden Seite, mit erheblichen Schwierigkeiten behaftet ist. Problematisch ist es dabei insbesondere, die Schlüssel sowohl dem Sender als auch dem Empfänger zur Verfügung zu stellen, ohne dass diese in unbefugte Hände gelangen, also "abgefischt" werden.

Darüber hinaus geht die Fachwelt ohnehin davon aus, dass Verschlüsselungsverfahren herkömmlicher Prägung, welche unter Einsatz gebräuchlicher, elektronisch basierter digitaler Technik ausgeführt werden, künftig keinen sicheren Schutz mehr bieten können. Dies gilt insbesondere im Hinblick auf die sich beschleunigende Entwicklung von Quantencomputern. Derartige, Effekte und Elemente der Quantenmechanik nutzende Computer werden dabei in absehbarer Zeit dazu in der Lage sein, bekannte Verschlüsselungsverfahren zu brechen, indem sie beispielsweise - im Falle einer Public-Key-Verschlüsselung - unter Nutzung des durch das Bekanntsein des öffentlichen Schlüssels gegebenen Informationsgewinns verschlüsselte Daten gewissermaßen im Wege eines "mathematischen Seitenkanals" berechnen oder indem sie - beispielsweise auch im Falle einer symmetrischen Verschlüsselung - Schlüssel aus physikalischen Parametern, die mit Hilfe von Seitenkanalangriffen gewonnen werden, weitgehend unabhängig von deren Länge in sehr kurzer Zeit berechnen.

Dem kann jedoch dadurch begegnet werden, dass für die Schlüsselerzeugung und Schlüsselverteilung Verfahren verwendet werden, die ebenfalls quantenmechanische Prinzipien nutzen. Auf diese Weise erzeugte und verteilte Schlüssel werden auch als QSK (Quantum Safety Key - Mehrzahl: QSKs) bezeichnet. Mit Verfahren, welche das QKD-Prinzip (Quantum Key Distribution) nutzen wurden Verfahren entwickelt, welche es ermöglichen, basierend auf physikalischen, nämlich quantenmechanischen Prinzipien ein nicht abhörbares Geheimnis, wie insbesondere einen kryptographischen Schlüssel, an zwei entfernten Lokationen im Grunde gleichzeitig zu etablieren. Soweit das QKD-Prinzip, nämlich eine QKD-Verbindung zur gleichzeitigen Generierung und Verteilung von QSKs, bereits in Kommunikationsnetzen oder zumindest in Teilen solcher Netze zum Einsatz gelangt, wird üblicherweise für den QKD-Kanal (Quantenkanal) eine gesonderte physische Verbindung verwendet, welche zusätzlich zu der oder den für die Übertragung verschlüsselter Nutz- oder Steuerdaten oder Daten mit sonstigen vertraulichen Informationen (im Weiteren wird vereinfachend häufig auch nur noch auf die Nutzdaten Bezug genommen) zur Verfügung gestellt werden muss.

Das heißt, in einem optischen Kommunikationsnetz wird, zusätzlich zu den, der im Allgemeinen unter Nutzung des WDM (Wavelengh Division Multiplex) erfolgenden Übertragung von Nutzdaten dienenden Lichtleitfasern, eine Faser für einen oder gegebenenfalls auch mehrere QKD-Kanäle bereitgestellt. Zwar vermeidet der Einsatz getrennter Fasern für die WDM-Datenkanäle einerseits und für den oder die QKD-Kanäle andererseits Störungen der QKD-Signale und Performance-Einbußen bei den über die WDM-Datenkanäle übertragenen Signalen mit den Nutzdaten. Jedoch ist das Bereitstellen jeweils einer zusätzlichen Faser für den oder die QKD-Kanäle (Quantenkanäle) vergleichsweise aufwändig und teuer, was insbesondere für bestimmte Netzbereiche, wie den Access-Bereich, also für den Bereich der Zugangsnetze, gilt, die hinsichtlich der Glasfaser-Infrastruktur eher schwach ausgebaut sind.

Daher gibt es Überlegungen dazu, ebenso wie auch mehrere Kanäle für Nutzdaten durch die Nutzung des WDM-Prinzips in einer einzigen Faser geführt werden können, QKD-Signale und Nutzdaten in unterschiedlichen Kanälen aber gemeinsam über ein und dieselbe Faser zu übertragen - man spricht hierbei von Ko-Propagation mindestens eines optischen Kanals für die QKD-Signale und von WDM-Kanälen für die Nutzdaten transportierenden Signale. Allerdings ist eine solche Ko-Propagation im Hinblick auf die sehr unterschiedliche Beschaffenheit von Nutzdaten transportierenden Signalen und von QKD-Signalen sowie im Hinblick auf zu beachtende spezielle Randbedingungen für QKD-Kanäle nicht ganz trivial. Dies hängt zum einen damit zusammen, dass die Nutzung des QKD-Prinzips die Möglichkeit einer Übertragung einzelner Photonen mit einer Intensität, respektive Leistung/Signalstärke erfordert (Intensität und Leistung, das heißt Signalstärke als Synonym für die Leistung, korrelieren hierbei insoweit, als die Intensität die Leistung bezogen auf eine Fläche bezeichnet), die typischerweise um einen Faktor von 80 dB oder 90 dB geringer ist als die der Signale, welche die Nutzdaten tragen. Zudem gilt es zu beachten, dass es gegenwärtig nicht möglich ist, QKD-Signale zu verstärken, da eine Führung der QKD-Signale über einen Verstärker zu einer Verfälschung beziehungsweise zu einer Zerstörung quantenmechanischer Zustände der im QKD-Kanal übertragenen Photonen führen würde, so dass eine Generierung und Verteilung von Schlüsseln nach dem QKD-Verfahren letztlich nicht mehr möglich wäre. Andererseits können QKD-Signale aufgrund ihrer sehr geringen Intensität über eine Glasfaser kaum über Distanzen übertragen werden, die wesentlich größer sind als 100 km, zumindest nicht im Rahmen brauchbarer Schlüsselraten.

Aufgrund des bereits angesprochenen großen Unterschieds in der Intensität, respektive in der Leistung, zwischen QKD-Signalen und Signalen nach dem WDM-Verfahren übertragener Nutzdaten besteht bei einer im Wege der Ko-Propagation von QKD-Kanal und WDM-Kanälen erfolgenden Übertragung eine erhebliche Gefahr, dass diese Kanäle sich gegenseitig stören, wobei insbesondere in dem mindestens einen QKD-Kanal die Fehlerrate gegebenenfalls so stark ansteigt, dass das QKD-Verfahren im Grunde nicht mehr ausführbar ist.

Ausführungen betreffend Versuche zur Ko-Propagation von Kanälen für die Übertragung von QKD-Signalen und WDM-Kanälen sowie zu den damit verbundenen Problemen finden sich zum Beispiel in Iris Choi et al.: "Field trial of a quantum secured 10 Gb/s DWDM transmission system over a single installed fiber" (OSA, Optics Express, 22 September 2014 | Vol. 22, No. 19) und in James Dynes et al.: "Ultra-high bandwidth quantum secured data transmission" (Nature, Scientific Reports, 13. Oct. 2016, 6:35149 | DOI: 10.1038/srep35149).

Das Dokument YUAN CAO ET AL: "Time-Scheduled Quantum Key Distribution (QKD) Over WDM Networks",JOURNAL OF LIGHTWAVE TECHNOLOGY, Bd. 36, Nr. 16, 15. August 2018 (2018-08-15), Seiten 3382-3395, XP055764537, ISSN: 0733-8724, zeigt ein System mit einem Netzwerkmanagement zur Bestimmung von Ressourcen für die Übertragung von QKD-Signalen und Nutzsignalen in einer gemeinsamen Glasfaser.

Aufgabe der Erfindung ist es, eine Lösung bereitzustellen, welche in einem Kommunikationsnetz zumindest abschnittsweise eine Ko-Propagation von QKD-Signalen mindestens eines QKD-Kanals und in WDM-Kanälen übertragener Signale für Nutz- und Steuerdaten ermöglicht, ohne dass es hierbei zu Störungen der QKD-Signale aufgrund einer Beeinflussung durch die Signale der WDM-Kanäle oder zu Performanceeinbußen bei der Übertragung der WDM-Signale, insbesondere zu einer erhöhten Fehlerrate, kommt. Hierzu sind ein Verfahren anzugeben und ein zur Durchführung dieses Verfahrens geeignetes Kommunikationsnetz bereitzustellen.

Die Aufgabe wird durch ein Verfahren mit den Merkmalen des Patentanspruchs 1 gelöst. Ein entsprechendes, zur Durchführung dieses Verfahrens geeignetes Kommunikationsnetz wird durch den unabhängigen Sachanspruch charakterisiert. Vorteilhafte Aus- und Weiterbildungen der Erfindung sind durch die jeweiligen Unteransprüche gegeben.

An dieser Stelle sollen zunächst einige dem Verständnis der nachfolgenden Ausführungen und der Patentansprüche dienende Erläuterungen erfolgen. Wie bereits ausgeführt, soll im Zusammenhang mit den über WDM-Kanäle übertragenen Signalen unabhängig von deren jeweiligen konkreten Art vereinfachend auch von Signalen für Nutzdaten gesprochen werden, wobei die vereinfachende Bezeichnung "Nutzdaten" zum Beispiel auch Steuerdaten umfasst, aber jedenfalls keine durch quantenmechanische Zustände, respektive Signale, vermittelten Daten, wie sie etwa im Zusammenhang mit der Erzeugung und Verteilung quantensicherer Schlüssel nach dem QKD-Prinzip übertragen werden.

In Bezug auf letzteres wird insoweit unterscheidend einerseits von WDM-Signalen und andererseits von QKD-Signalen gesprochen. Hiermit korrespondierend wird demgemäß zwischen WDM-Kanälen (synonym WDM-Datenkanälen) und (mindestens) einem, respektive gegebenenfalls mehreren QKD-Kanälen unterschieden. Bei den QKD-Signalen, welche über den mindestens einen synonym auch als Quantenkanal bezeichneten QKD-Kanal übertragen werden, handelt es sich ausschließlich um Signale mit quantenmechanischen Zuständen zur Erzeugung und gleichzeitigen Verteilung mittels des QKD-Prinzips erzeugter quantensicherer Schlüssel (QSKs). Die QKD-Signale haben gegenüber den über die WDM-Kanäle übertragenen Daten eine sehr viel (um 10er-Potenzen) niedrigere Leistung.

Soweit die Daten, welche durch die über die WDM-Kanäle übertragenen Signale vermittelt werden, hinsichtlich der Charakterisierung ihrer Art (Nutzdaten/Steuerdaten) in den nachfolgenden Darstellungen und in den Patentansprüchen einerseits in "Und"-verknüpften Formulierungen und andererseits in "Oder"verknüpften Formulierungen oder gar in "Und/Oder"-verknüpften Formulierungen angesprochen werden, ist dies für den Gegenstand der Erfindung ohne Belang. Dies rührt im Grunde lediglich daher, dass über einen WDM-Kanal sowohl Signale übertragen werden können, welche Steuerdaten (zum Beispiel auch Daten für die Steuerung des Kommunikationsvorgangs selbst oder der Kommunikationsinfrastruktur) vermitteln (transportieren) als Signale, welche Nutzdaten, nämlich Daten beliebiger anderer Art (nicht aber durch quantenmechanische Zustände vermittelte Daten) transportieren. Hierdurch begründet sich die "Und"-Verknüpfung.

Andererseits kann es sich bei einem angesprochenen, über einen WDM-Kanal übertragenen Signal selbst um ein Signal zur Vermittlung von Steuerdaten oder um ein Signal zur Vermittlung (beliebiger anderer) Nutzdaten handeln, wobei es sich bei übertragenen Steuerdaten, nämlich insbesondere dann, wenn sie nicht ausschließlich der Steuerung des Übertragungsvorgangs selbst oder der kommunikativen Infrastruktur dienen, gleichzeitig auch um Nutzdaten handeln kann. Hierdurch begründet sich die "Oder"-Verknüpfung, respektive im Zusammenhang mit dem zuvor Ausgeführten auch die "Und/Oder"-Verknüpfung. Dies ist aber, wie gesagt, für die Erfindung nicht von Bedeutung.

Soweit nachfolgend und in den Patentansprüchen auch von "dem QKD-Verfahren" gesprochen wird, sei klargestellt, dass auch dieses eine Vereinfachung darstellt, da es mehrere, sich insbesondere hinsichtlich der jeweils verwendeten Protokolle unterscheidende Verfahren gibt, welche sich des QKD-Prinzips einer gleichzeitigen Erzeugung und Verteilung quantensicherer Schlüssel unter Nutzung quantenmechanischer Effekte bedienen. Im Hinblick auf die vorstehend, zur Umsetzung des QKD-Prinzips angesprochenen Protokolle sei an dieser Stelle lediglich beispielhaft das BB84-Protokoll genannt.

Das zur Lösung der Aufgabe vorgeschlagene Verfahren geht von einer Situation aus, bei der die Übertragung von QKD-Signalen zur quantenmechanisch gesicherten Verteilung kryptographischer Schlüssel in einem über ein Netzmanagement verfügenden Kommunikationsnetz erfolgt. In diesem Kommunikationsnetz werden die QKD-Signale wenigstens eines QKD-Kanals zumindest abschnittsweise in Ko-Propagation mit in WDM-Kanälen zwischen Sendern und Empfängern übertragenen Signalen für Nutz- und Steuerdaten gemeinsam in einer Lichtleitfaser übertragen. Ein Netzmanagement, nämlich ein in der Regel durch ein übergeordnetes Netzmanagement und mit diesem als Bestandteil aktiver Netzwerkeinrichtungen oder Netzelemente interagierende lokale Managementkomponenten gebildetes Netzmanagement, gehört typischerweise ohnehin zu einem Kommunikationsnetz, insbesondere zu einem Weitverkehrsnetz. Wie eingangs ausgeführt, sind bereits auch Versuche unternommen worden, in einem solchen Kommunikationsnetz zumindest abschnittsweise QKD-Signale wenigstens eines QKD-Kanals in Ko-Propagation mit in WDM-Kanälen übertragenen Signalen in einer Lichtleitfaser zu übertragen. Als kritisch haben sich hierbei die gegenüber den WDM-Signalen um mehrere Zehnerpotenzen geringere Intensität der QKD-Signale und hieraus resultierende Störungen der QKD-Signale erwiesen. Um überhaupt eine Ko-Propagation von QKD-Kanälen und WDM-Kanälen zu ermöglichen, muss andererseits die Signalstärke (Leistung) der WDM-Signale sehr stark reduziert werden, was zu erheblichen Performanceeinbußen bei der Übertragung der WDM-Signale führt und somit ebenfalls ein Problem darstellt.

Um den vorgenannten Problemen entgegenzuwirken, wird erfindungsgemäß vorgeschlagen, dass in mindestens einem Netzabschnitt des Kommunikationsnetzes nur temporär Schlüssel nach dem QKD-Verfahren erzeugt und QKD-Signale zu deren Verteilung in Ko-Propagation mit Signalen in WDM-Kanälen übertragen werden. Weiterhin wird vorgeschlagen, während der Zeitdauer, in welcher QKD-Signale in Ko-Propagation mit WDM-Signalen übertragen werden, die Gesamtleistung der in den WDM-Kanälen übertragenen Signale (also Signale für Nutz- oder Steuerdaten) temporär zu verringern. Gesteuert wird dies durch das Netzmanagement, welches dazu auf geeignet ausgebildete und/oder eingerichtete Netzelemente des betreffenden Netzabschnitts einwirkt. Die nur temporär erzeugten und nach dem QKD-Verfahren verteilten Schlüssel werden, sofern sie nicht unmittelbar zum Einsatz gelangen, zur späteren Verwendung sender- und empfängerseitig lokal gespeichert, beispielsweise in einer lokal gehaltenen Datenbank. Die spätere Verwendung dieser Schlüssel in dem Kommunikationsnetz, nämlich ihre Verwendung zur verschlüsselten Datenübertragung, zur Authentifizierung der Identität eines Senders von Daten, zur Erzeugung digitaler Fingerprints oder für andere Krypto-Anwendungen, wird durch ein lokal ausgebildetes, vorzugsweise mit dem Netzmanagement interagierendes Schlüsselmanagement gesteuert.

Die vorstehend und in den Patentansprüchen verwendete Formulierung, wonach eine Ko-Propagation von QKD-Signalen und WDM-Signalen, wie erfindungsgemäß vorgesehen, in mindestens einem Netzabschnitt lediglich temporär erfolgt, nimmt ausdrücklich darauf Bezug, dass es unter Umständen in demselben Kommunikationsnetz auch mindestens einen Netzabschnitt geben kann, in welchem aufgrund der darin bestehenden Gegebenheiten ein solche Ko-Propagation von QKD-Signalen und WDM-Signalen ständig, aber jedenfalls ohne Absenkung der Gesamtleistung in den WDM-Kanälen erfolgt. Selbstverständlich kann es darüber hinaus in dem Kommunikationsnetz auch Netzabschnitte geben, in denen QKD-Signale über eine gesonderte Lichtleitfaser oder überhaupt keine QKD-Signale übertragen werden.

Die zuvor beschriebene Vorgehensweise eröffnet die Möglichkeit, beispielsweise nur in Zeiten eines geringeren Datenverkehrsaufkommens in dem Kommunikationsnetz beziehungsweise in einem Netzabschnitt Schlüssel nach dem QKD-Verfahren zu erzeugen und diese in Ko-Propagation mit den in diesen Zeiträumen in ihrer Gesamtleistung verringerten WDM-Signalen zu übertragen. Durch die verringerte Gesamtleistung der in den WDM-Kanälen übertragenen Signale (Signale für Nutz- oder Steuerdaten) werden Störungen der QKD-Signale, wie sie beispielsweise durch Übersprechen entstehen, weitgehend vermieden, wobei gleichzeitig wegen des geringeren Datenverkehrsaufkommens keine relevanten Performanceeinbußen durch die geringere Gesamtleistung der WDM-Signale zu verzeichnen sind.

Demgemäß ist es entsprechend einer möglichen Ausgestaltung des Verfahrens vorgesehen, dass die temporäre Verringerung der Gesamtleistung der in Ko-Propagation mit den QKD-Signalen über die WDM-Kanäle übertragenen Signale in dem mindestens einen Netzabschnitt - beispielsweise im Accessbereich beziehungsweise in einem Zugangsnetz - innerhalb dafür vorgesehener Zeiträume erfolgt. Bei den vorgenannten Zeiträumen kann es sich um feststehende (festgelegte) oder um veränderliche Zeiträume handeln. Die entsprechenden Zeiträume, innerhalb welcher von einer verringerten Nutzung der WDM-Kanäle für die Übertragung von Nutzdaten ausgegangen werden kann, beispielsweise die Nachtstunden, werden dabei in dem die temporäre Absenkung der Gesamtleistung der WDM-Kanäle steuernden Netzmanagement als feste Zeiten hinterlegt oder durch dieses auf der Basis eines hinterlegten Regelwerks bestimmt.

Das Verfahren ist hierbei vorzugsweise so gestaltet, dass während der Phasen einer verringerten Gesamtleistung der in den WDM-Kanälen übertragenen Signale und der damit einhergehenden Verringerung der OSNR (optical signal to noise ratio), also des optischen Signalrauschabstandes, der potenziell hieraus resultierenden Erhöhung der Gefahr für empfängerseitig auftretende Bitfehler entgegengewirkt wird. Erreicht werden kann dies zum Beispiel durch den Einsatz von optischen Schnittstellen mit einer variabel einstellbaren Datenübertragungsrate, nämlich von sogenannten optischen FlexRate-Schnittstellen, auf welche das Netzmanagement im Zusammenhang mit der Absenkung der Gesamtleistung der Signale in den WDM-Kanälen in geeigneter Weise einwirkt. Eine in diesem Kontext in Betracht kommende Möglichkeit besteht darin, während der temporären Übertragung der QKD-Signale in Ko-Propagation mit den in den WDM-Kanälen übertragenen Signalen die FlexRate-Schnittstellen für einen Wechsel des Modulationsverfahrens anzusteuern. Nähere Ausführungen dazu sollen später gegeben werden.

Alternativ oder auch kumulativ ist es möglich, gesteuert durch das Netzmanagement, während der Reduzierung der Gesamtleistung der WDM-Kanäle die Sender und Empfänger der WDM-Signale in dazu entsprechend ausgebildeten FlexRate-Schnittstellen so anzusteuern, dass die Symbolrate, also die Baudrate der ausgesendeten WDM-Signale, vorübergehend verringert wird.

Um einem eventuellen Ansteigen der empfängerseitigen Fehlerrate aufgrund der verringerten Gesamtleistung in den WDM-Kanälen entgegenzuwirken, kann außerdem während der Phasen, in denen die Gesamtleistung der in Ko-Propagation mit den QKD-Signalen über die WDM-Kanäle übertragenen Signale verringert wird, veranlasst durch das Netzmanagement, auf einen robusteren Algorithmus zur Vorwärtsfehlerkorrektur (FEC = Forward Error Correction) umgeschaltet werden.

Entsprechend einer weiteren grundsätzlichen Ausgestaltung des erfindungsgemäßen Verfahrens kann die Verringerung der Gesamtleistung der in Ko-Propagation mit den QKD-Signalen übertragenen WDM-Signale in einem Netzabschnitt nicht zu festgelegten Zeiten, sondern temporär dynamisch erfolgen. Dies geschieht unter Nutzung von QoS-Mechanismen, also die Qualität des Service wahrender Mechanismen, indem die Leistung in temporär zur Übertragung von Daten für Dienste mit geringeren Dienstgüteanforderungen genutzten WDM-Kanälen reduziert wird. Entsprechendes wird wiederum durch das Netzmanagement gesteuert, wobei es hierbei vorgesehen ist, dass die Leistung, im Falle einer sich verändernden Dienstnutzung und damit einer einhergehenden Steigerung der Dienstgüteanforderung, in einem betreffenden WDM-Kanal instantan wieder erhöht werden kann. Die Gesamtleistung der in dem mindestens einen Netzabschnitt über die WDM-Kanäle übertragenen Signale wird demgemäß jeweils gewissermaßen unmittelbar adaptiv angepasst. Auch diese Art der Verfahrensgestaltung schließt gemäß dem Grundprinzip der Erfindung mit ein, dass - bei entsprechenden Dienstgüteanforderungen - die Übertragung von QKD-Signalen erforderlichenfalls temporär unterbrochen wird. Gegebenenfalls, das heißt typischerweise (mithin nicht zwingend), wird im Falle der vorstehend angesprochen instantanen Erhöhung der Leistung in den WDM-Kanälen auch die mit dem Austausch von Quantensignalen einhergehende Schlüsselerzeugung nach dem QKD-Prinzip unterbrochen, und zwar vorzugsweise solange, bis die Leistung in den WDM-Kanälen wieder abgesenkt werden kann.

Das erfindungsgemäße Verfahren kann darüber hinaus vorzugsweise derart weitergebildet sein, dass die QKD-Signale unabhängig von einer temporären Unterbrechung ihrer in Ko-Propagation mit den WDM-Signalen erfolgenden Übertragung in mindestens einem Teilabschnitt des jeweils betrachteten Netzabschnitts auch in einer separaten Lichtleitfaser übertragen werden. In spezieller Ausgestaltung dieser Verfahrensweise ist es hierbei vorgesehen, dass die in dem vorgenannten Teilabschnitt in der separaten Lichtleitfaser übertragenen QKD-Signale am Ende dieses Teilabschnitts wieder in eine der Übertragung von zuvor in Ko-Propagation mit den QKD-Signalen geführten Signalen aus WDM-Kanälen dienende gemeinsame Lichtleitfaser eingekoppelt werden. Im Zusammenhang damit kann es beispielsweise vorgesehen sein, dass die QKD-Signale nach ihrer Wiedereinkopplung in die vornehmlich der Übertragung von WDM-Signalen mit Nutz- und/oder Steuerdaten dienende Lichtleitfaser in einem eigens für sie reservierten CWDM-Kanal (CWDM = Coarse Wavelengh Division Multiplex) geführt werden.

Wie durch die vorausgegangenen Erläuterungen erkennbar wird, ermöglicht es das vorgeschlagene Verfahren, der gestellten Aufgabe entsprechend, in einem Kommunikationsnetz abschnittsweise QKD-Signale in Ko-Propagation mit in WDM-Kanälen übertragenen Signalen für Nutz- und Steuerdaten zu übertragen und dabei die Gefahr gegenseitiger Beeinflussungen von QKD-Signalen und WDM-Signalen sehr weitgehend zu eliminieren. Hierdurch kann in vielen Fällen auf eine Bereitstellung gesonderter Fasern für eine Übertragung von QKD-Signalen verzichtet werden. Durch den Einsatz des Verfahrens werden dabei einerseits Störungen des oder der QKD-Kanäle vermieden, die letztlich zur Unmöglichkeit einer Verteilung von Schlüsseln nach dem QKD-Prinzip, nämlich insbesondere zu unbrauchbar geringen Schlüsselraten, führen könnten. Andererseits ist es im Hinblick auf die WDM-Signale gewährleistet, dass diese nicht, aufgrund einer Ko-Propagation mit QKD-Signalen, unter ständiger Hinnahme von Performanceeinbußen übertragen werden müssen. Während der Zeiträume, in denen (temporär) eine Ko-Propagation von QKD-Signalen und von WDM-Signalen erfolgt, werden dabei die WDM-Kanäle vorteilhafterweise nicht komplett "abgeschaltet". Vielmehr bleibt deren grundsätzliche Nutzbarkeit erhalten, wenngleich es sich in den Phasen einer temporären Ko-Propagation insoweit um eine "reduzierte Nutzbarkeit" handelt. Die grundsätzlich erhalten bleibende Nutzbarkeit ist jedoch von großer Bedeutung für Notruf- oder Alarmsysteme.

Bei dem zur Lösung der Aufgabe vorgeschlagenen, für die Durchführung des zuvor erläuterten Verfahrens geeigneten Kommunikationsnetz handelt es sich um ein über ein Netzmanagement verfügendes Kommunikationsnetz, in welchem QKD-Signale mindestens eines QKD-Kanals mindestens abschnittsweise gemeinsam in einer Lichtleitfaser, also in Ko-Propagation mit in WDM-Kanälen zwischen Sendern und Empfängern übertragenen Signalen mit Nutz- und/oder Steuerdaten geführt werden. Dabei ist das Netzmanagement dazu eingerichtet, im Zusammenwirken mit dazu ausgebildeten und/oder eingerichteten, sender- und empfängerseitig angeordneten Netzelementen in zumindest einem Netzabschnitt, in welchem eine in Ko-Propagation erfolgende Übertragung von QKD-Signalen und WDM-Signalen vorgesehen ist, eine solche Ko-Propagation nur temporär zuzulassen und dabei die Gesamtleistung der über die WDM-Kanäle übertragenen Signale temporär zu verringern. Die vorgenannten Netzelemente werden dazu durch das Netzmanagement entsprechend angesteuert.

Das Kommunikationsnetz ist zudem so ausgebildet, dass für mittels der temporär in Ko-Propagation übertragenen QKD-Signale verteilte und nicht unmittelbar verwendete Schlüssel sender- und empfangsseitig jeweils ein Netzelement zur Zwischenspeicherung von Schlüsseln angeordnet und ein Schlüsselmanagement zu deren Verwaltung vorgesehen ist. Die während der temporär erfolgenden Ko-Propagation von QKD-Signalen und WDM-Signalen verteilten Schlüssel, welche nicht unmittelbar, sondern gegebenenfalls erst in Zeiträumen zum Einsatz gelangen, in denen keine Verteilung von nach dem QKD-Prinzip erzeugten Schlüsseln unter Nutzung der Ko-Propagation erfolgt, werden, wie bereits zum Verfahren ausgeführt, lokal gespeichert und durch ein in entsprechend ausgebildeten Netzelementen realisiertes Schlüsselmanagement verwaltet. Vorzugsweise im Zusammenspiel zwischen dem Netzmanagement und diesem Schlüsselmanagement werden die Schlüssel dann später bei Bedarf koordiniert aus dem Speicher abgerufen und zur Verschlüsselung von Nutz- und Steuerdaten eingesetzt.

Soweit vorstehend und in den Patentansprüchen davon ausgegangen wird, dass das Netzmanagement zur Ausführung entsprechender, zur Durchführung des Verfahrens erforderlicher Steuerfunktionen eingerichtet ist, wohingegen die Netzelemente, auf weiche das Netzmanagement dabei einwirkt, hierzu ausgebildet und eingerichtet sind, liegen dem folgende Überlegungen zugrunde. Bei dem Netzmanagement handelt es sich um komplexe, gegebenenfalls in dem Netzwerk verteilt angeordnete computergestützte Einrichtungen, deren jeweilige Funktionalität beziehungsweise von ihnen ausführbare Funktionen weitgehend durch die von ihnen verarbeitete Software bestimmt werden. Je nach Programmierung, das heißt in diesen Einrichtungen hinterlegter Software, sind diese (durch Implementierung der Software) demnach zur Ausführung bestimmter Funktionen eingerichtet. Hingegen kann es erforderlich sein, im Zusammenspiel mit dem Netzmanagement bestimmte Funktionen ausführende Netzelemente eigens erst an entsprechenden Stellen des Kommunikationsnetzes anzuordnen oder dort vorhandene Netzelemente zur Ausführung der betreffenden Funktionen zu ertüchtigen. Die gegebenenfalls zusätzlich anzuordnenden Netzelemente sind demnach bereits zur (durch das Netzmanagement veranlassten) Ausführung der gewünschten Funktionen ausgebildet und eingerichtet. Dies gilt ebenso für bereits vorhandene Netzelemente nach einer Ertüchtigung zur Ausführung entsprechender Funktionen, wobei diese (im Hinblick auf die alternative Oder-Verknüpfung) dazu gegebenenfalls auch nur - beispielsweise durch ein Softwareupdate - eingerichtet werden müssen.

Gemäß einer, schon im Zusammenhang mit dem Verfahren angesprochenen Möglichkeit handelt es sich bei den zuvor genannten Netzelementen, welche dazu ausgebildet und eingerichtet sind, im Zusammenwirken mit dem Netzmanagement temporär die Gesamtleistung der über die WDM-Kanäle übertragenen Signale zu reduzieren, um optische FlexRate-Schnittstellen. Vorzugsweise sind diese dabei so eingerichtet, dass sie während der Reduzierung der Gesamtleistung in den WDM-Kanälen durch das Netzmanagement für einen Wechsel des von ihnen jeweils verwendeten Modulationsverfahrens angesteuert werden können, um - wie schon zum Verfahren ausgeführt - einer sich empfängerseitig beim Einlesen eingehender Signale aufgrund der sich verschlechternden OSNR potenziell erhöhenden Fehlergefahr entgegenzuwirken.

Durch einen Wechsel des Modulationsverfahrens und eine damit verbundene Änderung der Modulationsrate kann die Übertragung der WDM-Signale robuster gegen Störungen gemacht werden, die entstehen, wenn empfängerseitig eingehende Bits aufgrund der durch die Absenkung der Gesamtleistung verringerten OSNR falsch interpretiert werden. Zwar wird durch eine Absenkung der Modulationstiefe, wie sie beispielsweise beim Übergang von der 64QAM (Quadrature Amplitude Modulation = Quadraturamplitudenmodulation mit einer Übertragung von 6 bit pro Symbol) zur 16QAM (Quadraturamplitudenmodulation mit 4 bit pro übertragenen Symbol) einhergeht, die Datenübertragungsrate reduziert, jedoch wird hierdurch gleichzeitig eine Erhöhung der Robustheit gegenüber Störungen erreicht, so dass auch ein um einige dB geringerer Signalrauschabstand nicht zu einer signifikanten Erhöhung der Gefahr des Entstehens empfängerseitiger Fehler führt. Eine weitere Erhöhung der Robustheit der Übertragung kann beispielsweise durch eine weitere Verringerung der pro Symbol übertragenen Bits oder typischerweise auch durch einen Übergang von der QAM zur PSK (PSK = Phase Shift Keying - Phasenmodulation erreicht werden.

Anstatt einer durch das Netzmanagement gesteuerten Änderung des Modulationsverfahrens oder ergänzend dazu können die FlexRate-Schnittstellen auch so ausgebildet sein, dass deren optische Sender und Empfänger durch das Netzmanagement zur Verwendung einer niedrigeren Baudrate während der temporär reduzierten Gesamtleistung der WDM-Signale ansteuerbar sind. Auch hierdurch kann der sich aufgrund der Reduzierung der Gesamtleistung der WDM-Signale und der sich aufgrund dessen verschlechternden OSNR empfängerseitig potenziell erhöhten Fehlergefahr entgegengewirkt werden.

Aspekte der Erfindung sollen nachfolgend anhand von Zeichnungen nochmals erläutert werden. Die Erläuterungen erfolgen dabei in der Art eines Ausführungsbeispiels. Das heißt, die in den Zeichnungen gezeigten Strukturen und Konfigurationen von Teilen eines Kommunikationsnetzes sind beispielhaft, so dass die anhand ihrer erfolgende Erläuterung einzelner Aspekte der Erfindung keine Beschränkung der vorstehend allgemein beschriebenen erfindungsgemäßen Lösung darstellen. Die zugehörigen Zeichnungen zeigen im Einzelnen:
- Fig. 1:: die beispielhafte Ausbildung eines Accessbereichs (Zugangsnetzbereichs) eines Kommunikationsnetzes in einer schematischen Darstellung,
- Fig. 2:: eine andere Ausprägungsform eines Zugangsnetzbereichs in einem Kommunikationsnetz
- Fig. 3:: den Zugangsnetzbereich gemäß Fig. 2 mit einer Modifikation der Hauseinführung beim Kunden,
- Fig. 4a:: einen Kernnetzbereich mit mehreren Netzabschnitten - temporär ohne Nutzung einer Ko-Propagation von QKD- und WDM-Signalen,
- Fig. 4b:: den Kernnetzbereich gemäß Fig 4a - bei Ko-Propagation von QKD- und WDM-Signalen.

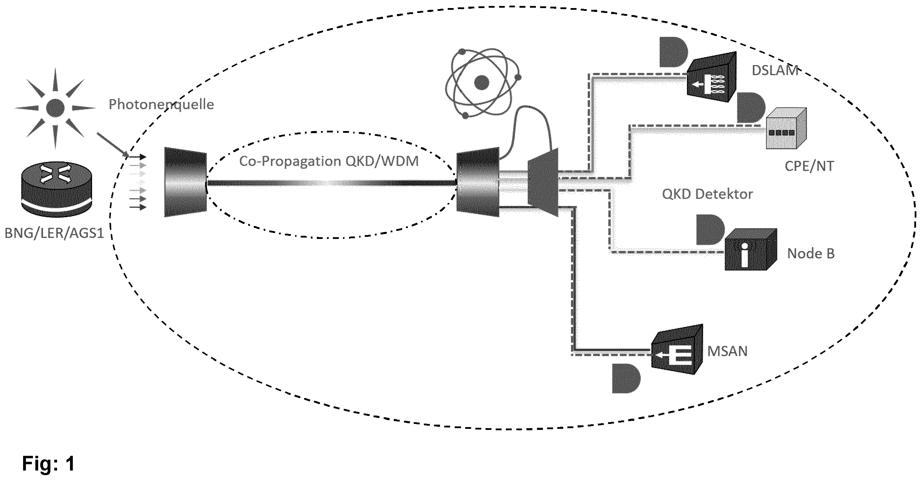

Die Fig. 1 zeigt in einer schematischen Darstellung eine mögliche Ausbildung des Accessbereichs, das heißt des Zugangsnetzbereichs (eingefasst durch gestrichelte Linie) eines Kommunikationsnetzes, einschließlich seiner Anbindung an das Kernnetz. Gemäß dem gezeigten Beispiel werden in dem Netzabschnitt, in welchem die Anbindung des Accessbereichs an das Kernnetz erfolgt (Strich-Punkt-Linie), QKD-Signale zumindest temporär in Ko-Propagation mit in WDM-Kanälen übertragenen Signalen übertragen. Die Anbindung an das Kernnetz erfolgt über einen Label Edge Router (LER), ein Breitbandnetzwerk-Gateway (BNG = Broadband Network Gateway), einen Aggregation Switch (AGS) oder dergleichen.

Im Accessbereich kommen oftmals GPONs (Gigabit Passive Optical Network) im Zeitmultiplex oder, zukünftig vermehrt, WDM-PONs zum Einsatz, was die Verwendung der Faser auf vielen Wellenlängen faktisch multipliziert. Um dennoch möglichst wenig aktive Technik auf dem Weg zu nachfolgenden Kunden oder weiteren Netzwerk-Betriebsstellen auszurollen zu müssen, werden passive, das heißt verstärkerlose Systeme verwendet. Eine typische Lösung stellen WDM-PONs mit CWDM (coarse wavelength division multiplex) dar, auch als pWDM, das heißt "passive WDM" bezeichnet.

In dem das BNG oder den LER mit dem Accessbereich verbindenden Netzabschnitt werden die QKD-Signale und die WDM-Signale über einen Multiplexer, nämlich einen DWDM-Multiplexer (MPX1), eingekoppelt. Gemäß der Erfindung werden jedoch QKD-Signale zum Zweck der Verteilung von nach dem QKD-Prinzip erzeugten Schlüsseln über diesen Netzabschnitt nur temporär übertragen, also QSKs (unter Nutzung der Quantenmechanik erzeugte Schlüssel) nur temporär generiert. Dazu wird während der temporär in Ko-Propagation erfolgenden

Übertragung von QKD- und WDM-Signalen in diesem Netzabschnitt die Gesamtleistung der über die WDM-Kanäle übertragenen Signale reduziert, um eine Störung der QKD-Signale durch Übersprechen aus den WDM-Kanälen weitgehend zu vermeiden. Das Reduzieren der Gesamtleistung der WDM-Signale erfolgt im Zusammenspiel zwischen einem hier nicht gezeigten Netzmanagement und beispielsweise (ebenfalls nicht gezeigten) FlexRate-Schnittstellen, wobei vorzugsweise außerdem einer erhöhten empfängerseitigen Fehlergefahr zum Beispiel durch Umschalten des in den FlexRate-Schnittstellen verwendeten Modulationsverfahrens entgegengewirkt wird. Überzählige, das heißt während dieser temporären Phase der in Ko-Propagation mit WDM-Signalen erfolgenden Übertragung von QKD-Signalen erzeugte und verteilte, aber nicht unmittelbar verwendete Schlüssel werden sender- und empfängerseitig in Verwaltung durch ein Schlüsselmanagement lokal (also im Bereich des Multiplexers MPX1 am BNG/LER und im Bereich DSLAM, Node B, MSAN und CPE/NT) zwischengespeichert.

Während die QKD-Signale und die WDM-Signale in dem Netzabschnitt der Anbindung zwischen dem Zugangsnetz und dem Kernnetz typischerweise über ein Bündel von Glasfasern übertragen werden, wie auch in dem dargestellten Beispiel, herrscht im Zugangsnetz ein gewisser Fasermangel. Ausgehend von der örtlichen Zugangsstelle werden daher netzseitige Endeinrichtungen, wie ein DSLAM, eine Basisstation für den Mobilfunk (Node B), ein MSAN, also ein Multi Service Access Knoten, oder kundenspezifische Einrichtungen auf Grundstücken von Kunden nur über wenige oder gar nur über eine einzelne Glasfaser versorgt. Daher werden die QKD-Signale und die WDM-Signale mittels eines DWDM-Multiplexers MPX2 zunächst voneinander getrennt. Durch einen nachfolgenden CWDM-Multiplexer (MPX3) werden die QKD-Signale unter Nutzung eines eigens für sie reservierten Kanals wieder in die Glasfaser eingekoppelt und dem bestimmungsgemäßen netzseitigen Abschlusselement zugeführt, wo sie mittels eines QKD-Detektors und eines Filters wieder herausgefiltert und für die Verschlüsselung verwendet werden können.

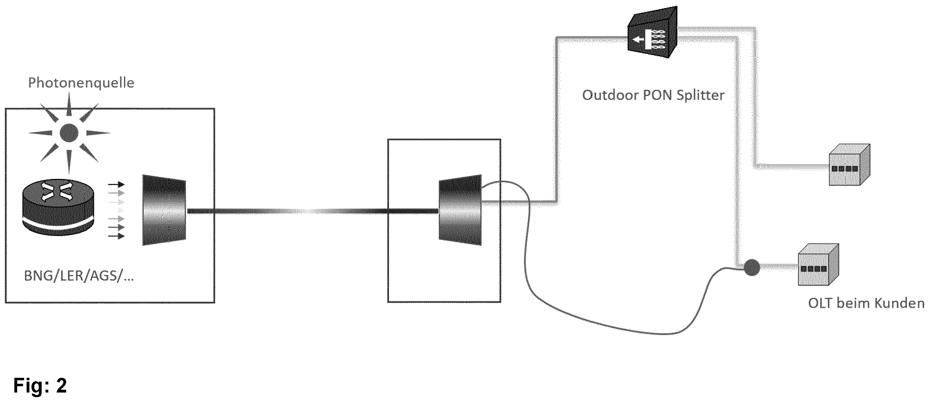

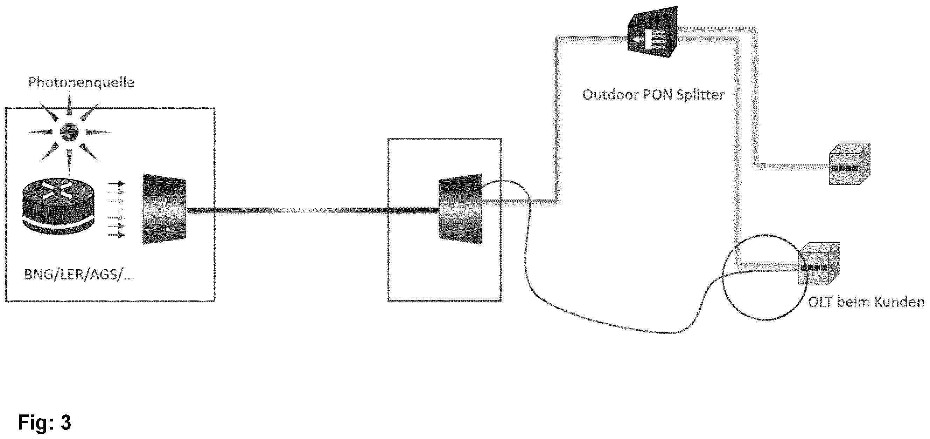

Die Fig. 2 zeigt ein gegenüber der Fig. 1 etwas anders ausgebildetes Zugangsnetz, ebenfalls in einer schematische Darstellung. Hier wird ein Outdoor PON Splitter betrachtet, welcher beispielsweise in einem Street Cabinet angeordnet ist und optische Netzabschlusseinrichtungen beim Kunden mit zuvor über einen WDM-Kanal übertragenen Signalen versorgt. Zwischen einer dieser kundenseitigen Netzabschlusseinrichtungen (OLT = Optical Line Termination) und der örtlichen Zugangsstelle ist dabei eine verschlüsselte Datenübertragung unter Nutzung mittels des QKD-Verfahrens erzeugter und verteilter Schlüssel vorgesehen. Zu der betreffenden kundenseitigen Netzabschlusseinrichtung (OLT) werden jedoch die QKD-Signale bis kurz vor der Hauseinführung beim Kunden nicht in Ko-Propagation mit den WDM-Signalen übertragen, sondern über eine separate Faser, um sie auf einem kürzeren Weg zum Kunden zu führen. Erst unmittelbar vor der Hauseinführung beziehungsweise der kundenseitigen Netzabschlusseinrichtung (OLT) wird das QKD-Signal wieder in die auch die Nutz- und Steuerdaten übertragende Faser eingekoppelt. Wie die Fig. 3 zeigt, können die QKD-Signale abweichend hiervon, bei Vorliegen entsprechender örtlicher Gegebenheiten, auch gar nicht wieder in die zur Übertragung der Nutz- und Steuerdaten genutzte Lichtleitfaser eingekoppelt, sondern direkt über die Hauseinführung zugeführt werden.

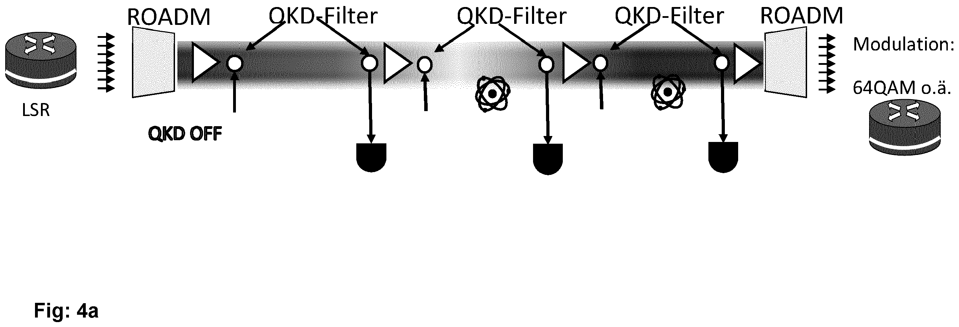

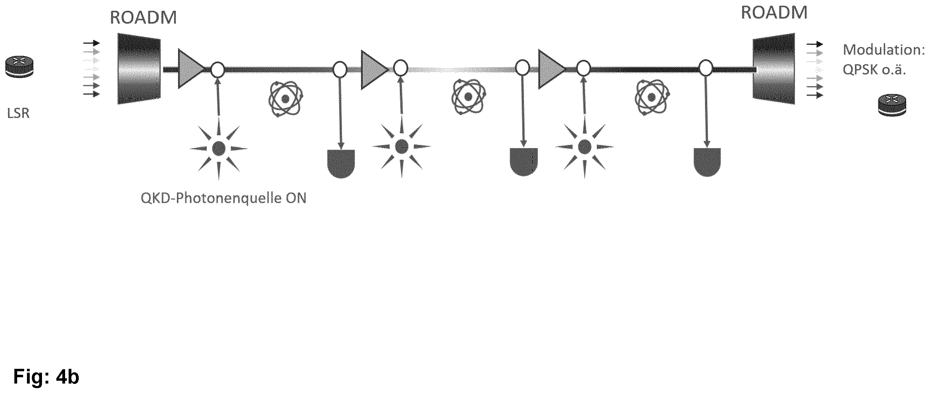

Die Fig. 4a und 4b zeigen einen Kernnetzbereich eines Kommunikationsnetzes mit mehreren Netzabschnitten. Wie aus der schematischen Darstellung ersichtlich, werden die in DWDM-Kanälen übertragenen Nutz- und Steuerdaten im Hinblick auf die große zu überbrückende Distanz am Ende eines jeden Netzabschnitts durch einen optischen Verstärker verstärkt. Da QKD-Signale nicht verstärkt werden können, weil dies zu einer Zerstörung der durch sie vermittelten quantenmechanischen Zustände führen würde, werden in den jeweiligen Netzabschnitten in Ko-Propagation mit den WDM-Signalen übertragene QKD-Signale jeweils vor einem optischen Verstärker (jeweils symbolisiert durch ein Dreieck) ausgekoppelt. Die ausgekoppelten QKD-Signale werden bezogen den jeweiligen Netzabschnitt jeweils lokal verarbeitet. Gegebenenfalls können sie dabei aber auch entsprechend einem als "Trusted Node" bezeichneten Ansatz mit den QKD-Signalen des jeweils benachbarten Netzabschnitts Exklusiv-ODER (XOR) verknüpft werden.

In den einzelnen Netzwerkabschnitten werden QKD-Signale zur Schlüsselverteilung, dem Grundgedanken der Erfindung folgend, jedoch nur temporär generiert und in Ko-Propagation mit den WDM-Signalen übertragen. Letztere werden währenddessen hinsichtlich ihrer Gesamtleistung durch ein entsprechendes Zusammenwirken eines Netzmanagements mit Netzelementen am Anfang und am Ende eines jeden Netzabschnitts reduziert. Verdeutlicht wird dies in den Abbildungen der Fig 4a und 4b dadurch, dass in der Fig 4a, welche die Datenübertragung schematisch für die Zeiträume darstellt, in denen keine Übertragung von QKD-Signalen im Wege der Ko-Propagation erfolgt und daher die Gesamtleistung der in den WDM-Kanälen übertragenen Signale nicht reduziert ist, der Übertragungsweg in den einzelnen Netzabschnitten breiter gezeichnet ist als in der Fig. 4b, welche die Verhältnisse für die Zeiträume einer in Ko-Propagation erfolgenden Übertragung von QKD-Signalen und WDM-Signalen veranschaulicht, wobei die Gesamtleistung der WDM-Signale reduziert ist. Wie bereits ausgeführt, kann in diesem Zusammenhang durch entsprechendes Einwirken des Netzmanagements auf eingangs und ausgangs der Netzabschnitte angeordnete (nicht gezeigte) FlexRate-Schnittstellen beispielsweise vorübergehend das Modulationsverfahren geändert werden und/oder die Baudrate ihrer optischen Sende- und Empfangseinrichtungen reduziert werden.

## Patentansprüche

1. Verfahren für die Übertragung von QKD-Signalen zur quantenmechanisch gesicherten Verteilung kryptographischer Schlüssel in einem über ein Netzmanagement verfügenden Kommunikationsnetz, in welchem QKD-Signale wenigstens eines QKD-Kanals zumindest abschnittsweise in Ko-Propagation mit in WDM-Kanälen zwischen Sendern und Empfängern übertragenen Signalen für Nutz- und Steuerdaten gemeinsam in einer Lichtleitfaser übertragen werden, wobei in mindestens einem Netzabschnitt des Kommunikationsnetzes nur temporär Schlüssel nach dem QKD-Verfahren erzeugt und QKD-Signale zu deren Verteilung in Ko-Propagation mit Signalen in WDM-Kanälen übertragen werden und wobei in diesen WDM-Kanälen währenddessen die Gesamtleistung der übertragenen Signale temporär verringert wird, wobei dies durch das dazu auf geeignet ausgebildete und/oder eingerichtete Netzelemente dieses mindestens einen Netzabschnitts einwirkende Netzmanagement gesteuert wird und wobei temporär innerhalb dieses Netzabschnitts nach dem QKD-Verfahren verteilte, aber nicht unmittelbar zum Einsatz gelangende Schlüssel, zur späteren, durch ein Schlüsselmanagement gesteuerten Verwendung für kryptographische Anwendungen sender- und empfängerseitig lokal gespeichert werden.

2. Verfahren nach Anspruch 1, **dadurch gekennzeichnet, dass** die temporäre Verringerung der Gesamtleistung der in Ko-Propagation mit den QKD-Signalen über die WDM-Kanäle übertragenen Signale in dem mindestens einen Netzabschnitt innerhalb durch das Netzmanagement vorgegebener Zeiträume erfolgt.

3. Verfahren nach Anspruch 2, **dadurch gekennzeichnet, dass** die Zeiträume für die in dem mindestens einen Netzabschnitt temporär erfolgende Ko-Propagation und für die dazu erfolgende temporäre Verringerung der Gesamtleistung der WDM-Signale durch das Netzmanagement entsprechend vorab getroffener, in dem Netzmanagement hinterlegter Festlegungen oder dynamisch angepasst vorgegeben werden.

4. Verfahren nach Anspruch 1 oder 3, **dadurch gekennzeichnet, dass** die Verringerung der Gesamtleistung der in Ko-Propagation mit den QKD-Signalen über die WDM-Kanäle übertragenen Signale in dem mindestens einen Netzabschnitt temporär dynamisch erfolgt, indem durch einen Einsatz von QoS-Mechanismen, nämlich die Qualität des Service wahrender Mechanismen, die Leistung in temporär zur Übertragung von Daten für Dienste mit geringeren Dienstgüteanforderungen genutzten WDM-Kanälen reduziert wird, wobei diese Leistung im Falle einer sich verändernden Dienstnutzung und einer damit einhergehenden Steigerung der Dienstgüteanforderung, gesteuert durch das Netzmanagement, instantan wieder erhöht wird, so dass die Gesamtleistung der in dem mindestens einen Netzabschnitt über die WDM-Kanäle übertragenen Signale adaptiv angepasst wird und hierbei in diesem Netzabschnitt die Übertragung von QKD-Signalen erforderlichenfalls auch temporär unterbrochen werden kann.

5. Verfahren nach einem der Ansprüche 1 bis 4, **dadurch gekennzeichnet, dass** das Netzmanagement mit dem Beginn einer temporären Reduzierung der Gesamtleistung der WDM-Kanäle auf optische Flexrate-Schnittstellen, nämlich auf optische Schnittstellen mit variabel einstellbarer Datenübertragungsrate, einwirkt, um der sich während der temporären Reduzierung der Gesamtleistung, aufgrund der damit verbundenen Verschlechterung der OSNR, bei der Übertragung der WDM-Signale empfängerseitig erhöhenden Fehlergefahr entgegenzuwirken.

6. Verfahren nach Anspruch 5, **dadurch gekennzeichnet, dass** die Flexrate-Schnittstellen durch das Netzmanagement zur Verwendung eines anderen Modulationsverfahrens während der temporären Reduzierung der Gesamtleistung der WDM-Signale angesteuert werden.

7. Verfahren nach Anspruch 5 oder 6, **dadurch gekennzeichnet, dass** als Bestandteil der Flexrate-Schnittstellen ausgebildete Sender und Empfänger für die WDM-Signale durch das Netzmanagement zur Verwendung einer niedrigeren Baudrate während der temporären Reduzierung der Gesamtleistung der WDM-Signale angesteuert werden.

8. Verfahren nach einem der Ansprüche 1 bis 7, **dadurch gekennzeichnet, dass** im Zusammenhang mit der temporären Verringerung der Gesamtleistung der in Ko-Propagation mit den QKD-Signalen über die WDM-Kanäle übertragenen Signale in dem mindestens einen Netzabschnitt einem eventuellen Ansteigen der empfängerseitigen Fehlerrate durch ein vom Netzmanagement veranlasstes Umschalten auf einen robusteren Algorithmus zur FEC, nämlich zur Vorwärtsfehlerkorrektur, entgegengewirkt wird.

9. Verfahren nach einem der Ansprüche 1 bis 8, **dadurch gekennzeichnet, dass** die QKD-Signale unabhängig von einer temporären Unterbrechung ihrer in Ko-Propagation mit den Signalen der WDM-Kanäle erfolgenden Übertragung in mindestens einem Teilabschnitt des mindestens einen Netzabschnitts in einer separaten Lichtleitfaser übertragen werden.

10. Verfahren nach Anspruch 9, **dadurch gekennzeichnet, dass** die in dem Teilabschnitt in der separaten Lichtleitfaser übertragenen QKD-Signale am Ende dieses Teilabschnitts wieder in eine der Übertragung von zuvor in Ko-Propagation mit den QKD-Signalen geführten Signalen aus WDM-Kanälen dienende Lichtleitfaser eingekoppelt werden.

11. Kommunikationsnetz, nämlich über ein Netzmanagement verfügendes Kommunikationsnetz, in welchem QKD-Signale mindestens eines QKD-Kanals zur quantenmechanisch gesicherten Verteilung kryptographischer Schlüssel zumindest abschnittsweise gemeinsam in einer Lichtleitfaser in Ko-Propagation mit in WDM-Kanälen zwischen Sendern und Empfängern übertragenen Signalen für Nutz- und Steuerdaten übertragen werden, wobei das Netzmanagement dazu eingerichtet ist, im Zusammenwirken mit dazu ausgebildeten und/oder eingerichteten, sender- und empfängerseitig angeordneten Netzelementen, in zumindest einem Netzabschnitt, in welchem QKD-Signale in Ko-Propagation mit in WDM-Kanälen übertragenen Signalen übertragen werden, eine solche Ko-Propagation nur temporär zuzulassen und währenddessen in diesem Netzabschnitt die Gesamtleistung der über die WDM-Kanäle übertragenen Signale temporär zu verringern, wobei sender- und empfängerseitig jeweils ein Netzelement angeordnet ist, welches ausgebildet ist zur Zwischenspeicherung von mittels der temporär in Ko-Propagation übertragenen QKD-Signale verteilten, aber nicht unmittelbar verwendeten Schlüsseln, für deren spätere Verwendung für kryptographische Anwendungen das Kommunikationsnetz über ein diese Schlüssel verwaltendes und ihren Einsatz steuerndes Schlüsselmanagement verfügt.

12. Kommunikationsnetz nach Anspruch 11, **dadurch gekennzeichnet, dass** es sich bei den zur temporären Reduzierung der Gesamtleistung der über die WDM-Kanäle übertragenen Signale mit dem Netzmanagement zusammenwirkenden Netzelementen um optische Flexrate-Schnittstellen handelt, nämlich um optische Schnittstellen mit variabel einstellbarer Datenübertragungsrate.

13. Kommunikationsnetz nach Anspruch 12, **dadurch gekennzeichnet, dass** die Flexrate-Schnittstellen dazu eingerichtet sind, durch das Netzmanagement für einen Wechsel des von ihnen verwendeten Modulationsverfahrens angesteuert zu werden.

14. Kommunikationsnetz nach Anspruch 12 oder 13, **dadurch gekennzeichnet, dass** die Flexrate-Schnittstellen mit Sendern und Empfängern mit einer einstellbaren Baudrate ausgestattet sind.

## Claims

1. Method for transmitting QKD signals for quantum mechanically secure distribution of cryptographic keys in a communication network that has a network management and in which QKD signals of at least one QKD channel are transmitted, at least section by section, collectively in an optical fibre in copropagation with signals for payload and control data that are transmitted in WDM channels between transmitters and receivers, wherein, in at least one network section of the communication network, keys are generated using the QKD method only temporarily and QKD signals for distributing said keys are transmitted in copropagation with signals in WDM channels and wherein, in these WDM channels, the total power of the transmitted signals is temporarily decreased in the meantime, wherein this is controlled by the network management, which influences suitably designed and/or configured network elements of this at least one network section for this purpose, and wherein keys that are temporarily distributed within this network section using the QKD method, but that are not used immediately, are stored locally at the transmitters and receivers for later use for cryptographic applications, said use being controlled by a key management.

2. Method according to Claim 1, **characterized in that** the temporary decrease in the total power of the signals in the at least one network section that are transmitted in copropagation with the QKD signals via the WDM channels is effected within periods of time that are predefined by the network management.

3. Method according to Claim 2, **characterized in that** the periods of time for the copropagation that is temporarily being effected in the at least one network section and for the temporary decrease in the total power of the WDM signals that is being effected for this purpose are predefined by the network management in accordance with previously made stipulations stored in the network management or in a dynamically adapted manner.

4. Method according to Claim 1 or 3, **characterized in that** the decrease in the total power of the signals in the at least one network section that are transmitted in copropagation with the QKD signals via the WDM channels is effected temporarily dynamically by using QoS mechanisms, namely mechanisms maintaining quality of service, to reduce the power in WDM channels that are temporarily used for transmitting data for services having lower quality of service requirements, wherein this power is instantaneously increased again, under the control of the network management, in the event of a changing service use and an accompanying increase in the quality of service requirement, with the result that the total power of the signals transmitted in the at least one network section via the WDM channels is adaptively adjusted and in this case the transmission of QKD signals in this network section can also be temporarily interrupted if required.

5. Method according to one of Claims 1 to 4, **characterized in that** the network management influences optical FlexRate interfaces, namely optical interfaces having a variably adjustable data transmission rate, at the beginning of a temporary reduction in the total power of the WDM channels in order to counteract the increasing risk of error at the receivers during transmission of the WDM signals during the temporary reduction in the total power, owing to the associated deterioration in the OSNR.

6. Method according to Claim 5, **characterized in that** the FlexRate interfaces are actuated by the network management to use another modulation method during the temporary reduction in the total power of the WDM signals.

7. Method according to Claim 5 or 6, **characterized in that** transmitters and receivers for the WDM signals that are in the form of part of the FlexRate interfaces are actuated by the network management to use a lower baud rate during the temporary reduction in the total power of the WDM signals.

8. Method according to one of Claims 1 to 7, **characterized in that**, in connection with the temporary decrease in the total power of the signals in the at least one network section that are transmitted in copropagation with the QKD signals via the WDM channels, a possible rise in the error rate at the receivers is counteracted by a changeover, as prompted by the network management, to a more robust algorithm for FEC, namely for forward error correction.

9. Method according to one of Claims 1 to 8, **characterized in that** the QKD signals are transmitted in a separate optical fibre regardless of a temporary interruption in their transmission in at least one subsection of the at least one network section that is being effected in copropagation with the signals of the WDM channels.

10. Method according to Claim 9, **characterized in that** the QKD signals transmitted in the subsection in the separate optical fibre are, at the end of this subsection, again coupled into an optical fibre that is used for transmitting signals that have previously been carried from WDM channels in copropagation with the QKD signals.

11. Communication network, namely a communication network that has a network management and in which QKD signals of at least one QKD channel for quantum mechanically secure distribution of cryptographic keys are transmitted, at least section by section, collectively in an optical fibre in copropagation with signals for payload and control data that are transmitted in WDM channels between transmitters and receivers, wherein the network management is configured so as, in conjunction with network elements designed and/or configured for this purpose that are arranged at the transmitters and the receivers, in at least one network section in which QKD signals are transmitted in copropagation with signals transmitted in WDM channels, to permit such copropagation only temporarily and, in the meantime, in this network section, to temporarily decrease the total power of the signals transmitted via the WDM channels, wherein the transmitters and the receivers each have a network element arranged with them that is designed to buffer-store keys that are distributed by means of the QKD signals temporarily transmitted in copropagation, but that are not used immediately, for later use of said keys for cryptographic applications, the communication network having a key management that manages these keys and controls the use thereof.

12. Communication network according to Claim 11, **characterized in that** the network elements cooperating with the network management to temporarily reduce the total power of the signals transmitted via the WDM channels are optical FlexRate interfaces, namely optical interfaces having a variably adjustable data transmission rate.

13. Communication network according to Claim 12, **characterized in that** the FlexRate interfaces are configured to be actuated by the network management to change the modulation method that they use.

14. Communication network according to Claim 12 or 13, **characterized in that** the FlexRate interfaces are equipped with transmitters and receivers having a variable baud rate.

## Revendications

1. Procédé de transmission de signaux de QKD pour la distribution sécurisée par mécanique quantique de clés cryptographiques dans un réseau de communication disposant d'un gestionnaire de réseau, dans lequel des signaux de QKD d'au moins un canal de QKD sont transmis dans une fibre optique au moins par portions dans une co-propagation conjointement avec des signaux transmis dans des canaux WDM entre des émetteurs et des récepteurs pour des données utiles et de commande, dans au moins une portion de réseau du réseau de communication, seules étant générées des clés temporaires selon le procédé de QKD et seuls étant transmis des signaux de QKD en vue de leur distribution dans une co-propagation avec des signaux dans des canaux WDM et, pendant ce temps, la puissance totale des signaux transmis étant temporairement réduite dans ces canaux WDM, ceci étant commandé par le gestionnaire de réseau agissant à cet effet sur des éléments de réseau configurés et/ou conçus de manière appropriée dans cette au moins une portion de réseau et les clés distribuées temporairement à l'intérieur de cette portion de réseau d'après le procédé de QKD, mais qui ne sont pas immédiatement utilisées, étant mémorisées localement en vue d'une utilisation ultérieure commandée par un gestionnaire de clé pour des applications cryptographiques du côté de l'émetteur et du récepteur.

2. Procédé selon la revendication 1, **caractérisé en ce que** la réduction temporaire de la puissance totale dans la co-propagation avec les signaux de QKD des signaux transmis par le biais des canaux WDM dans l'au moins une portion de réseau s'effectue à l'intérieur de périodes prédéfinies par le gestionnaire de réseau.

3. Procédé selon la revendication 2, **caractérisé en ce que** les périodes pour la co-propagation effectuée temporairement dans l'au moins une portion de réseau et pour la réduction temporaire de la puissance totale des signaux WDM effectuée à cet effet sont prédéfinies par le gestionnaire de réseau conformément à des dispositions préalablement prises dans le gestionnaire de réseau ou dynamiquement.

4. Procédé selon la revendication 1 ou 3, **caractérisé en ce que** la réduction de la puissance totale dans la co-propagation avec les signaux de QKD des signaux transmis par le biais des canaux WDM dans l'au moins une portion de réseau s'effectue temporairement de manière dynamique en réduisant, par une utilisation de mécanismes de QoS, à savoir des mécanismes qui préservent la qualité de service, la puissance dans les canaux WDM utilisés temporairement pour la transmission de données pour des services ayant de faibles exigences en matière de qualité de service, cette puissance étant instantanément de nouveau augmentée, commandée par le gestionnaire de réseau, dans le cas d'une utilisation qui change du service et une augmentation qui en découle de l'exigence en matière de qualité de service, de sorte que la puissance totale des signaux transmis par le biais des canaux WDM dans l'au moins une portion de réseau est adaptée de manière adaptative et la transmission de signaux de QKD dans cette portion de réseau peut ainsi, si nécessaire, également être interrompue temporairement.

5. Procédé selon l'une des revendications 1 à 4, **caractérisé en ce que** le gestionnaire de réseau, avec le début d'une réduction temporaire de la puissance totale des canaux WDM, agit sur des interfaces optiques à débit flexible, à savoir sur des interfaces optiques ayant des débits de transmission de données réglables de manière variable, afin de contrer le risque d'erreur qui augmente du côté du récepteur lors de la transmission des signaux WDM pendant la réduction temporaire de la puissance totale en raison de la dégradation qui en résulte de l'OSNR.

6. Procédé selon la revendication 5, **caractérisé en ce que** les interfaces à débit flexible sont commandées par le gestionnaire de réseau en vue d'utiliser un autre procédé de modulation pendant la réduction temporaire de la puissance totale des signaux WDM.

7. Procédé selon la revendication 5 ou 6, **caractérisé en ce que** les émetteurs et récepteurs pour les signaux WDM configurés en tant qu'élément constitutif des interfaces à débit flexible sont commandés par le gestionnaire de réseau pour utiliser un débit plus faible pendant la réduction temporaire de la puissance totale des signaux WDM.

8. Procédé selon l'une des revendications 1 à 7, **caractérisé en ce qu'**une éventuelle augmentation du taux d'erreurs côté récepteur est contrecarrée en association avec la réduction temporaire de la puissance totale des signaux transmis par le biais des canaux WDM en co-propagation avec les signaux de QKD dans l'au moins une portion de réseau par une permutation provoquée par le gestionnaire de réseau sur un algorithme de FEC, à savoir de correction d'erreur directe, plus robuste.

9. Procédé selon l'une des revendications 1 à 8, **caractérisé en ce que** les signaux de QKD sont transmis dans une fibre optique séparée indépendamment d'une interruption temporaire de leur transmission effectuée en co-propagation avec les signaux des canaux WDM dans au moins une portion partielle de l'au moins une portion de réseau.

10. Procédé selon la revendication 9, **caractérisé en ce que** les signaux de QKD transmis dans la portion partielle dans la fibre optique séparée sont de nouveau injectés à la fin de cette portion partielle dans une fibre optique servant à la transmission des signaux issus des canaux WDM préalablement acheminés en co-propagation avec les signaux de QKD.

11. Réseau de communication, à savoir réseau de communication disposant d'un gestionnaire de réseau, dans lequel des signaux de QKD d'au moins un canal de QKD pour la distribution sécurisée par mécanique quantique de clés cryptographiques sont transmis dans une fibre optique au moins par portions dans une co-propagation conjointement avec des signaux transmis dans des canaux WDM entre des émetteurs et des récepteurs pour des donnés utiles et de commande, le gestionnaire de réseau étant conçu pour, en coopération avec des éléments de réseau configurés et/ou conçus à cet effet, disposés du côté émetteur et du côté récepteur, dans au moins une portion de réseau, dans laquelle les signaux de QKD sont transmis en co-propagation avec des signaux transmis dans des canaux WDM, n'autoriser que temporairement une telle co-propagation et, pendant ce temps, réduire temporairement dans cette portion de réseau la puissance totale des signaux transmis par le biais des canaux WDM, un élément de réseau étant respectivement disposé du côté émetteur et du côté récepteur, lequel est configuré pour la mémorisation temporaire des clés distribuées au moyen des signaux de QKD transmis temporairement en co-propagation, mais non utilisées immédiatement, le réseau de communication disposant, en vue de leur utilisation ultérieure pour des applications cryptographiques, d'un gestionnaire de clé qui gère ces clés et qui commande leur utilisation.

12. Réseau de communication selon la revendication 11, **caractérisé en ce que** les éléments de réseau qui coopèrent avec le gestionnaire de réseau pour la réduction temporaire de la puissance totale des signaux transmis par le biais des canaux WDM sont des interfaces optiques à débit flexible, à savoir des interfaces optiques ayant des débits de transmission de données réglables de manière variable.

13. Réseau de communication selon la revendication 12, **caractérisé en ce que** les interfaces à débit flexible sont conçues pour être commandées par le gestionnaire de réseau pour un changement du procédé de modulation qu'elles utilisent.

14. Réseau de communication selon la revendication 12 ou 13, **caractérisé en ce que** les interfaces à débit flexible sont équipées d'émetteurs et de récepteurs ayant un débit réglable.
